# EUROPEAN PATENT APPLICATION

(11) **EP 4 810 671 A1**
(43) Date of publication of application: **23.09.2026**
(21) Application number: 24891426.9
(22) Date of filing: 13.11.2024
(51) Int. Cl.: C25B 13/08, C08G 61/10, C08K 3/04, C08L 65/00, C25B 1/04, C25B 9/00, C25B 9/23, C25B 11/055, H01M 4/86, H01M 8/10, H01M 8/1004, H01M 8/1023, H01M 8/1067

(54) **CATALYST COATED ELECTROLYTE MEMBRANE**

(30) Priority: 16.11.2023 JP 2023194981
(71) Applicant: Nippon Kayaku Kabushiki Kaisha, Tokyo 100-0005 (JP)
(72) Inventor: YANAGIBASHI, Naoki, Tokyo 115-8588 (JP)
(74) Representative: LLR
(86) International application number: PCT/JP2024/040317
(87) International publication number: WO 2025/105390

(57) **Abstract**

Provided is a catalyst-coated electrolyte membrane which has excellent water electrolysis performance at low voltage in an anion exchange membrane water electrolysis test, and is highly durable to the extent that there is no problem even when used in an AEMWE method. A catalyst-coated electrolyte membrane (100) includes (A) an electrolyte membrane having a stress at break of 85 MPa or more (11), and (B) catalyst layers (12, 13).

## Description

### Technical Field

The present disclosure relates to a catalyst-coated electrolyte membrane used for water electrolysis, and more specifically, to a catalyst-coated electrolyte membrane obtained by using an anion exchange membrane (AEM) as an electrolyte membrane and coating the electrolyte membrane with a catalyst layer.

### Background Art

Electrolyte membranes are used in various fuel cells, such as polymer electrolyte fuel cells and solid alkaline fuel cells, and in various electrolysis technologies, such as water electrolysis. The electrolyte membranes are required to have excellent ionic conductivity and durability to withstand long-term use.

Among water electrolysis, an anion exchange membrane water electrolysis method (AEMWE method) has been proposed as a technology to replace a cation exchange membrane water electrolysis method or an alkali water electrolysis method, and has attracted attention in recent years. An anion exchange membrane (AEM) is used as a membrane separating an anode chamber and a cathode chamber, and pure water or an alkaline aqueous solution is supplied to the anode chamber as an anolyte. Pure water or an alkaline aqueous solution may be supplied to the cathode chamber as a catholyte, but a dry cathode electrolytic cell in which the catholyte is not supplied to the cathode chamber also may be used. In the case of this dry cathode type electrolytic cell, water penetrates into the cathode chamber from the anode chamber through the anion exchange membrane, whereby water is supplied to the cathode chamber, and hydroxide ions are generated together with hydrogen gas from water by a cathode reaction in the cathode chamber.

The electrolyte membrane used in such an AEMWE method is used as a catalyst-coated electrolyte membrane (hereinafter referred to as CCM (Catalyst-Coated Membrane). That is, the CCM is constructed in a layered structure, and substantially includes an anode catalyst layer, an electrolyte membrane, and a cathode catalyst layer, and an ionomer layer is disposed between each catalyst layer and the electrolyte membrane.

For example, Patent Literature 1 discloses a structure of a water electrolysis cell used for the AEMWE method. When water electrolysis is performed with this structure, excessive pressure is applied from the anode chamber to the cathode chamber, and a stress is applied to the CCM. Therefore, high durability is required for the CCM.

In addition, unlike the cation exchange membrane water electrolysis method and the alkali water electrolysis method, since the state change from liquid to gas continuously occurs in the catalyst layer or the ionomer layer and the electrolyte membrane layer, the mechanical strength required for CCM is further increased.

Patent Literature 2 discloses, as an anion-conductive polymer for an electrolyte membrane having excellent chemical durability and excellent solubility in a solvent, a polymer having a structure in which a divalent aromatic group having an ionic functional group and a spirobifluorene skeleton are alternately repeated.

However, in Patent Literature 2, evaluation is only conducted in fuel cell applications that do not require consideration of issues peculiar to the AEMWE method, and it has been unclear what level of strength is required to solve the issues peculiar to the AEMWE method. Furthermore, guidelines for improving mechanical strength have not been clarified, such as which properties of the electrolyte membrane should be improved, which properties of the catalyst layer should be improved, or whether adhesion at interfaces between respective layers should be improved.

### Citation List

### Patent Literature

Patent Literature 1: International Patent Publication No. WO2022/244805
Patent Literature 2: Japanese Unexamined Patent Application Publication No. 2018-135487

### Summary of Invention

### Technical Problem

In view of the above circumstances, an object of the present disclosure is to provide a catalyst-coated electrolyte membrane which has excellent water electrolysis performance at a low voltage in an anion exchange membrane water electrolysis test, and has excellent mechanical strength.

### Solution to Problem

As a result of intensive studies, the present inventors have focused on a tensile stress at break of an electrolyte membrane, and have found that the above problem can be solved.

That is, the present disclosure relates to the following 1) to 9).
1): A catalyst-coated electrolyte membrane comprising (A) an electrolyte membrane having a stress at break of 85 MPa or more and (B) a catalyst layer.
2): The catalyst-coated electrolyte membrane according to the above 1), in which the electrolyte membrane (A) contains a polymer having an anion exchange group.
3): The catalyst-coated electrolyte membrane according to the above 1) or 2), having anion exchange membrane water electrolysis performance.
4): The catalyst-coated electrolyte membrane according to any one of the above 1) to 3), having (A-1) a polymer having no ionic conductivity in the electrolyte membrane (A).
5): The catalyst-coated electrolyte membrane according to any one of the above 1) to 4), in which the electrolyte membrane (A) has an ion exchange capacity of 0.8 to 1.5 mmol/g.
6): The catalyst-coated electrolyte membrane according to any one of the above 1) to 5), in which the catalyst layer (B) contains an ionomer (B-1), and a ratio of a stress at break of the ionomer (B-1) to a stress at break of the electrolyte membrane (A) is 0.01 or more and 0.5 or less.
7): The catalyst-coated electrolyte membrane according to the above 6), containing, as the ionomer (B-1), the same polymer as the polymer used for the electrolyte membrane (A).
8): The catalyst-coated electrolyte membrane according to any one of the above 1) to 7), in which the electrolyte membrane (A) has a pore-filling structure.
9): The catalyst-coated electrolyte membrane according to any one of the above 1) to 8), in which the electrolyte membrane (A) contains a polymer having a structural unit represented by the following formula (1): 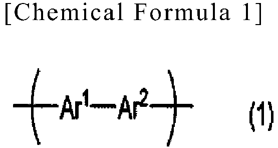
   wherein Ar¹ is an aromatic group having an ion exchange group, or a group in which aromatic rings having ion exchange groups are linked through a single bond, and a plurality of Ar¹s may be the same or different,
   Ar² is an aromatic group having no ion exchange group, or a group in which two or more aromatic rings having no ion exchange group are linked through a single bond or a spiro atom, and a plurality of Ar²s may be the same or different, and
   the aromatic rings of Ar¹ and the aromatic rings of Ar² are linked through a single bond.

### Advantageous Effects of Invention

According to the present disclosure, it is possible to provide a catalyst-coated electrolyte membrane which has excellent water electrolysis performance at a low voltage in an anion exchange membrane water electrolysis test, and is highly durable to the extent that there is no problem even when used in an AEMWE method.

### Brief Description of Drawings

Fig. 1 is a view illustrating an example of a layer structure of a catalyst-coated electrolyte membrane of the present embodiment; and
Fig. 2 is a view illustrating another example of the layer structure of the catalyst-coated electrolyte membrane of the present embodiment.

### Description of Embodiments

Hereinafter, an example of an embodiment to which the present disclosure is applied will be described. The numerical value specified in the present specification is a value determined by the method disclosed in the embodiment or examples. Note that other embodiments are also included in the scope of the present disclosure as long as they meet the spirit of the present disclosure. The expression "to" indicating numerical ranges in the present disclosure means that the numerical values described before and after it are included as the lower and upper limits.

The catalyst-coated electrolyte membrane of the present disclosure includes (A) an electrolyte membrane having a stress at break of 85 MPa or more (hereinafter, also referred to as an electrolyte membrane (A)) and (B) a catalyst layer.

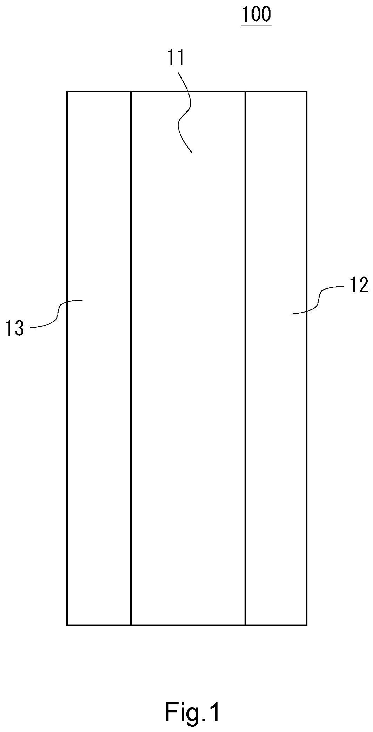

Fig. 1 shows an example of a layer structure of a catalyst-coated electrolyte membrane of the present embodiment. As shown in the same figure, a catalyst-coated electrolyte membrane 100 includes an electrolyte membrane 11, a first catalyst layer 12 formed on a first main surface side of the electrolyte membrane 11, and a second catalyst layer 13 formed on a second main surface side of the electrolyte membrane 11. In the catalyst-coated electrolyte membrane of the present embodiment, the electrolyte membrane 11 is the electrolyte membrane having a stress at break of 85 MPa or more (A). Also, in the example of Fig. 1, the first catalyst layer 12 and the second catalyst layer 13 are the catalyst layers (B) of the present disclosure. One of the first catalyst layer 12 and the second catalyst layer 13 may be the catalyst layer (B), and the other may be a catalyst layer that does not correspond to the catalyst layer (B). In addition, a catalyst-coated electrolyte membrane in which a catalyst layer is formed only on one main surface side of the electrolyte membrane 11 may be used. That is, in the catalyst-coated electrolyte membrane of the present disclosure, the catalyst layer (B) may be formed on at least one of the main surfaces of the electrolyte membrane (A). Hereinafter, the electrolyte membrane (A) and the catalyst layer (B) will be described.

### [Electrolyte membrane having a stress at break of 85 MPa or more (A)]

In the present disclosure, an electrolyte membrane having a stress at break of 85 MPa or more (A) is used.

### <Electrolyte membrane (A)>

The electrolyte membrane (A) is a membrane containing a polymer having an ion exchange group, and as a preferable example, there are (i) a membrane composed of a polymer having an ion exchange group, and (ii) a membrane composed of impregnating a porous base material with a polymer having an ion exchange group. The porous base material is a membrane having a so-called pore-filling structure, and examples thereof include a base film having pores and a nonwoven fabric. Here, as the pores, for example, a submicron size, a micron size, or the like can be selected. The pores need only communicate in the thickness direction of the base film, and are not limited to those in which pores are formed in the thickness direction.

Here, the expression "polymer(s)" includes "copolymer(s)" unless otherwise specified. The expression "ion exchange group(s)" refers to a functional group(s) having dissociation properties and capable of ion exchange. The expression "ion exchange group(s)" is preferably an anion exchange group. The anion exchange group is a substituent having a cation, and is, for example, a group in which a heteroatom is cationized. Examples of the anion exchange group include quaternary ammonium salts, imidazolium salts, pyridinium salts, and phosphonium salts.

### (Stress at break)

The electrolyte membrane (A) used in the present disclosure has a stress at break of 85 MPa or more.

The stress at break is a numerical value measured according to the following measurement method.

### Measurement method;

### 1) Preparation of test piece

In the case of the above (i), a polymer having an ion exchange group is formed into a film so as to be self-supporting by coating and drying. In the case of the above (ii), pores of the base film are filled with or impregnated with a polymer having an ion exchange group. As the base film, a polymer having no ionic conductivity is suitably used.

In the case of the above (i), for example, a polymer having an ion exchange group is dissolved in a solvent to form a solution, the solution is dropped onto a release film, and the solvent is removed to prepare a film having a thickness of about 10 to 40 µm. Then, the release film is removed. The obtained film is cut into 3 mm × 50 mm to obtain a test piece.

In the case of the above (ii), a polymer having an ion exchange group is dissolved in a solvent to form a solution, the solution is dropped onto a base film having pores, and the solvent is removed to prepare a film in which the pores of the base film are filled with the polymer having an ion exchange group. The thickness of the base film is preferably 10 to 40 µm. Then, the obtained film is cut into 3 mm × 50 mm to obtain a test piece. As the base film, a polyolefin film such as polyethylene, polypropylene, or polytetrafluoroethylene (PTFE), or an amide-based film such as polyimide or polyamide is preferably used, and a polyolefin film is more preferably used. The pore size is preferably a submicron size.

### 2) Measurement of stress at break

The prepared test piece is subjected to a uniaxial tensile test at 0.3 m/min in an environment of 25°C and 40%RH using EZ-SX (manufactured by Shimadzu Corporation), and the stress at break is calculated from the cross-sectional area of the fracture surface.

When the strain of the test piece is large and exceeds the measurement limit, a test piece of 1.5 mm × 50 mm may be used.

The lower limit of the stress at break is 85 MPa, but in order of increasing preference,90 MPa, 95 MPa, 100 MPa, 115 MPa, 120 MPa, and 125 MPa are exemplified, and particularly preferably 130 MPa. In addition, the upper limit is determined from the relationship with other configurations and thus cannot be generally defined; however, it may be, for example, about 200 MPa, and 150 MPa is particularly preferable.. Therefore, the most preferable stress at break is 125 MPa or more and 150 MPa or less.

### (Polymer)

The polymer having an ion exchange group used for the electrolyte membrane (A) of the present disclosure is preferably a polyarylene polymer. By using the polyarylene polymer, an electrolyte membrane having excellent chemical durability is obtained.

Furthermore, the polyarylene polymer is preferably a polymer having a structural unit represented by the following general formula (1) (hereinafter, also referred to as polymer (P)) from the viewpoint that excellent ionic conductivity is imparted to the pore-filling membrane. 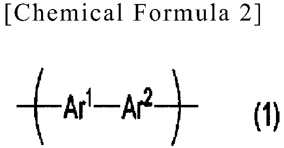
wherein Ar¹ is an aromatic group having an ion exchange group, or a group in which aromatic rings having ion exchange groups are linked through a single bond, and a plurality of Ar¹s may be the same or different,
Ar² is an aromatic group having no ion exchange group, or a group in which two or more aromatic rings having no ion exchange group are linked through a single bond or a spiro atom, and a plurality of Ar²s may be the same or different, and
the aromatic rings of Ar¹ and the aromatic rings of Ar² are linked through a single bond.

Polymer (P) is a polymer having two or more of the above structural units (1), and has a structure in which Ar¹ having an ion exchange group and Ar² having no ion exchange group are alternately disposed. The aromatic group of Ar¹ and the aromatic group of Ar² are bonded by a single bond to form a main chain. Polymer (P) does not contain an ethereal linkage (ether oxygen) (-O-), sulfonyl (-S(=O)₂-), or carbonyl (-C(=O)-) skeleton in the main chain backbone, which results in excellent chemical durability, especially alkali durability. The aromatic ring herein refers to the aromatic ring constituting the main chain, and the aromatic ring constituting the main chain may have additional aromatic rings as substituents. A distinction is made between aromatic rings constituting the main chain and aromatic rings as substituents (side chains).

Ar¹ is an aromatic group having an ion exchange group, or a group in which aromatic rings having ion exchange groups are linked through a single bond.

When proton conductivity is imparted to polymer (P), acidic groups are preferred as ion exchange groups, and among acidic groups, sulfonic acid groups (-SO₃H groups), phosphoric acid groups (-H₂PO₄ groups), or carboxylic acid groups (-COOH groups) are preferred, and sulfonic acid groups are more preferred. The H of the above acidic group may be dissociated or substituted with alkali metal ions, alkaline earth metal ions and the like.

When anion conductivity is imparted to polymer (P), quaternary ammonium or imidazolium groups are preferred as ion exchange groups, and quaternary ammonium groups are more preferred. Quaternary alkyl ammonium groups are further preferred as the above quaternary ammonium groups from the viewpoint of alkali durability. The quaternary alkyl ammonium groups include those in which alkyl groups bonded to nitrogen atoms are bonded to form a ring structure, such as azaadamantyl groups and quinuclidinium groups.

Preferred specific examples of the above quaternary ammonium groups include groups represented by the following formulas (e-1) to (e-8). Preferred specific examples of imidazolium groups include groups represented by the following formula (f-1), and groups represented by the following formula (f-2) or (f-3) are more preferred.

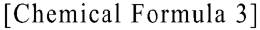

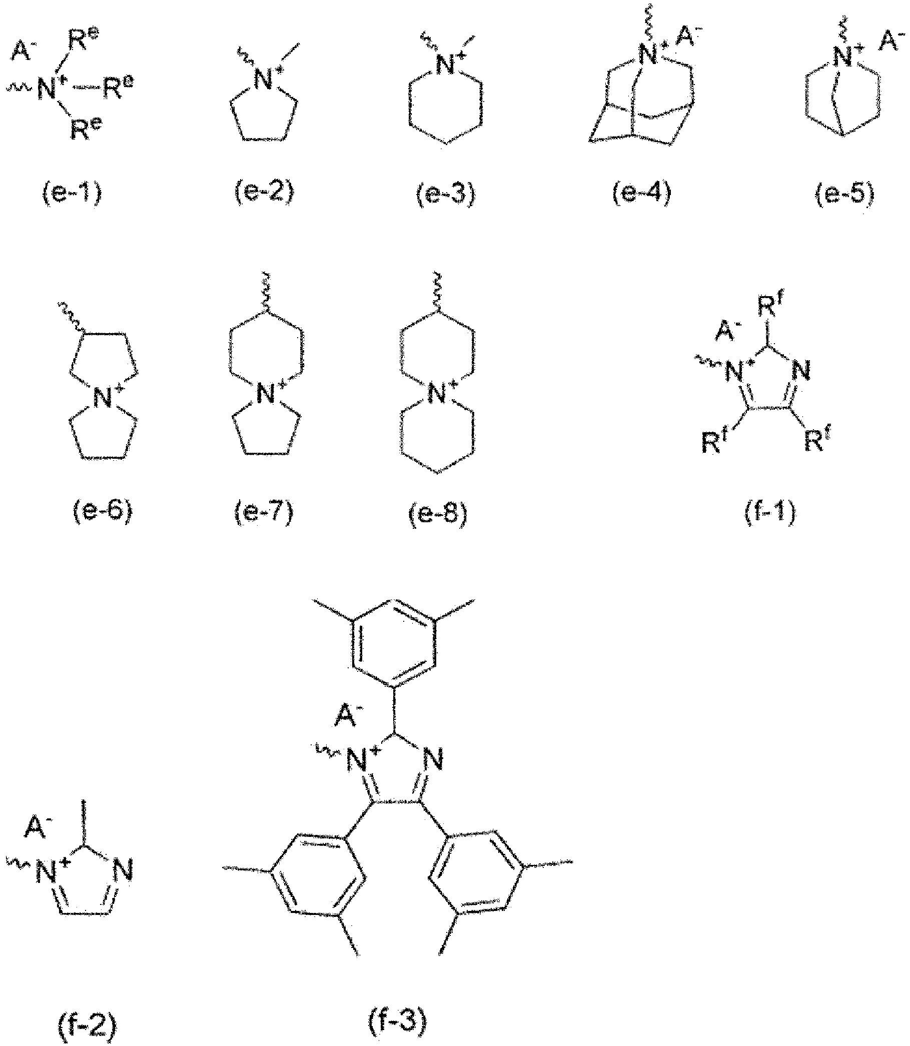

In the formula, R^{e} is each independently a linear, branched, or cyclic alkyl group having 1 to 6 carbon atoms; R^{f} is each independently a hydrogen atom, a linear or branched alkyl group having 1 to 4 carbon atoms, or an aromatic group optionally having a substituent; and A⁻ is a monovalent or divalent or higher anion. When there is more than one R^{e} or R^{f}, the more than one R^{e} or R^{f} may be the same or different, respectively. Note that the wavy line in the formula indicates a bonding site that binds to the aromatic ring side constituting the main chain in Ar¹.

Specific examples of alkyl groups as the above R^{e} include a methyl group, an ethyl group, a propyl group, a butyl group, a pentyl group, a hexyl group, and a cyclohexyl group. Specific examples of alkyl groups as the above R^{f} include a methyl group, an ethyl group, a propyl group, and a butyl group. Examples of aromatic groups as R^{f} include a phenyl group, and examples of substituents of the phenyl group include an alkyl group having 1 to 6 carbon atoms.

An inorganic anion is preferred as the above A⁻, and examples thereof include chloride ion (Cl⁻), bromide ion (Br⁻), iodide ion (I⁻), bicarbonate ion (HCO₃⁻), carbonate ion (CO₃²⁻), hydroxide ion (OH⁻), sulfate ion (SO₄²⁻), chlorate ion (ClO₃⁻), nitrate ion (NO₃⁻), cyanide ion (CN⁻), sulfite ion (HSO₃⁻), bromate ion (BrO₃⁻), and fluoride ion (F⁻). Among them, hydroxide ion (OH⁻), bromide ion (Br⁻), bromate ion (BrO₃⁻), chloride ion (Cl⁻), bicarbonate ion (HCO₃⁻), and carbonate ion (CO₃²⁻) are preferable, and hydroxide ion (OH⁻), bromide ion (Br⁻), chloride ion (Cl⁻), bicarbonate ion (HCO₃⁻), and carbonate ion (CO₃²⁻) are particularly preferable.

The above ion exchange group may be directly bonded to the aromatic ring constituting the main chain in Ar¹, or may also have a linking group and be bonded to the aromatic ring constituting the main chain through the linking group. The linking group represents an organic group that connects the acidic group, quaternary ammonium group or imidazolium group possessed by the ion exchange group to the aromatic ring constituting the main chain. A linear or branched alkylene group is preferred as the organic group, and a linear alkylene group is particularly preferred. The number of carbon atoms of the alkylene group can be suitably adjusted according to the physical properties required for polymer (P). For example, by setting the number of carbon atoms of the above alkylene group to 20 or less, preferably 16 or less, more preferably 12 or less, the ion exchange group capacity of polymer (P) is increased. Meanwhile, by setting the number of carbon atoms of the above alkylene group to 2 or more, preferably 4 or more, more preferably 6 or more, the solubility and swelling resistance are excellent and polymer (P) can be easily filled into the porous base material.

The number of ion exchange groups per aromatic ring constituting the main chain in Ar¹ may be one or more, and from the viewpoint of ionic conductivity and polymer stability, one to two is preferred.

The aromatic ring constituting the main chain in Ar¹ may be a benzene ring, a fused ring such as a naphthalene ring or an anthracene ring, or a heterocyclic ring (e.g., thiophene) containing an oxygen atom (O), a nitrogen atom (N), or a sulfur atom (S). A structure in which these aromatic rings are linked by single bonds may also be used. Examples of structures in which multiple rings are linked by single bonds include, for example, biphenyl, terphenyl, and fluorene.

In addition to the above ion exchange group, the aromatic ring constituting the main chain in Ar¹ may have substituents other than ion exchange groups. Examples of the substituents include alkyl groups having 1 to 20 carbon atoms and optionally having substituents, phenyl groups optionally having substituents, and halogeno groups.

Specific examples of the above alkyl groups include a methyl group, an ethyl group, a propyl group, a n-butyl group, a tert-butyl group, a pentyl group, a hexyl group, and an octyl group, which may have phenyl groups, halogeno groups and the like, as substituents. Substituents that the above phenyl groups may have include alkyl groups having 1 to 6 carbon atoms, and halogeno groups. The above halogeno groups include a fluoro group, a chloro group, a bromo group, and an iodo group.

In view of excellent mechanical strength, chemical durability, and ionic conductivity, it is particularly preferred that the above Ar¹ of polymer (P) is a group represented by any of the following formulas (a-1) to (a-10).

A plurality of Ar¹s in the polymer may be the same or different from each other. 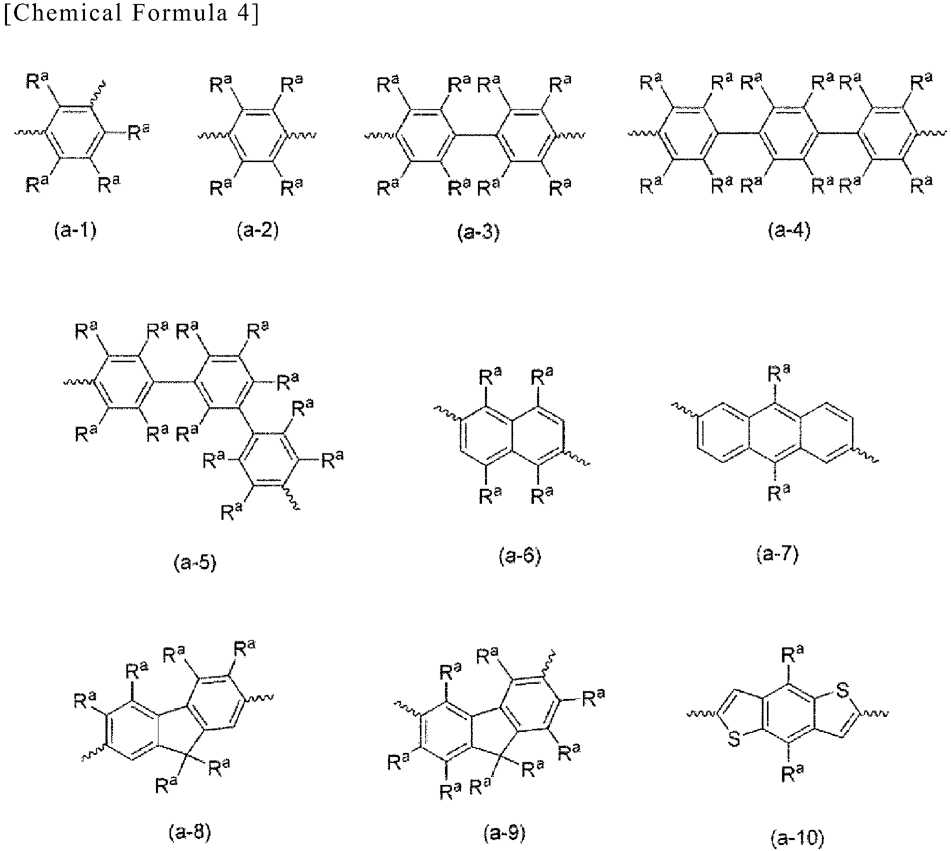 in which R^{a} is each independently a hydrogen atom, an ion exchange group, or a substituent having no ion exchange group, and a plurality of R^{a}s may be the same or different from each other, and at least one of R^{a} is an ion exchange group. Note that the wavy line indicates the bonding site that binds to Ar².

The aromatic rings constituting the main chain in Ar² include those similar to those in the above Ar¹ and groups linked through a spiro atom. The aromatic ring in Ar² may have other substituents other than anion exchange groups. The other substituents include those similar to the substituents other than the ion exchange group in the above Ar¹.

The groups in which two or more aromatic rings are linked through a spiro atom in Ar² include, for example, a group represented by the following formula (c1). Also, the groups in which two or more aromatic rings are linked through a single bond include, for example, groups represented by the following formulas (c2) to (c4). Note that the wavy line indicates the bonding site that binds to Ar¹. From the viewpoint of filling ability of the polymer in the porous base material, it is preferable that Ar² has no spiro atom. 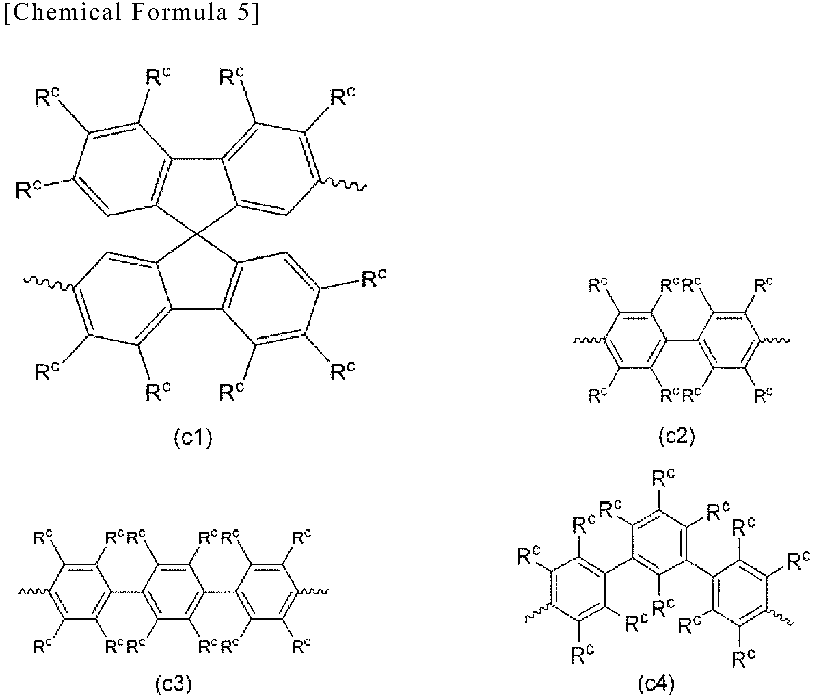 in which R^{C} is each independently a hydrogen atom, a halogeno group or an organic group.

The weight average molecular weight of polymer (P) can be suitably adjusted from the viewpoint of chemical durability, ease of filling into the pores and the like, and can be, for example, in the range of 10,000 to 1,000,000. From the viewpoint of chemical durability, 30,000 or more is preferable, and 100,000 or more is more preferable. Especially when the porous base material is a polyolefin porous base material, even if the weight average molecular weight of polymer (P) is 100,000 or more, it is easy for the polymer to be filled into the pores. The weight average molecular weight is a polystyrene equivalent value measured by GPC (gel permeation chromatography).

Polymer (P) may consist only of the structural unit represented by the general formula (1) (also referred to as structural unit (1)), or may have other structural units. Other structural units include, for example, a structure in which no anion exchange group is introduced into Ar¹ of the structural unit (1). It may also contain other structures that may arise during synthesis.

The following polymers (P1) to (P4) are particularly preferred as polymer (P). Polymer (P2), polymer (P3), or polymer (P4) is preferred, and polymer (P2), or polymer (P3) is preferred from the viewpoint of filling ability of the polymer in the porous base material, and polymer (P3) is further preferred from the viewpoints of filling ability of the polymer, mechanical strength and chemical durability. These polymers will be described in detail below.

### - Polymer (P1)

Polymer (P1) has repeating units represented by the following general formula (1-1): 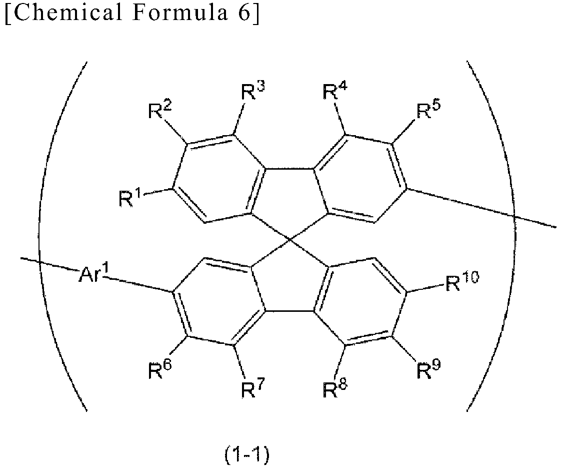 in which R¹ to R¹⁰ are each independently a hydrogen atom, an alkyl group having 1 to 4 carbon atoms, or a phenyl group, and Ar¹ is the same as that in the above formula (1), and preferred embodiments thereof are also the same.

Examples of alkyl groups having 1 to 4 carbon atoms in R¹ to R¹⁰ include a methyl group, an ethyl group, a propyl group and a tert-butyl group. In polymer (P1), from the viewpoint of improving solubility, it is preferred that at least one of R¹ and R¹⁰ is an alkyl group, and it is more preferred that R¹ and R¹⁰ are alkyl groups, and it is further preferred that R¹ and R¹⁰ are tert-butyl groups. By having a bulky substituent in at least one of R¹ and R¹⁰, aggregation of the polymer due to π-π stacking or the like is suppressed, and solubility in solvents is improved. Meanwhile, it is preferred that R¹ to R⁸ are each independently a hydrogen atom or a methyl group, and it is more preferred that they are hydrogen atoms.

Polymer (P1) has a structure in which Ar¹ having an anion exchange group and a spirobifluorene skeleton are alternately repeated. In polymer (P1), each element constituting the main chain backbone is part of an aromatic ring or is a spiro atom having no hydrogen atom, and since the main chain backbone has no ether bond, degradation in the presence of alkali or radicals is suppressed and chemical durability is excellent. In addition, the spirobifluorene skeleton has a structure in which two fluorenes are twisted almost at right angles through a spiro atom, and by the fluorene skeleton constituting the main chain, the entire main chain has many bends. As a result, the planarity of the main chain is reduced, which inhibits π-π stacking, and it also has excellent solubility in solvents and is easy to handle when filling porous base materials.

The synthesis method of polymer (P1) is not particularly limited, but one suitable example includes the method of Scheme A1 below.

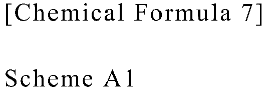

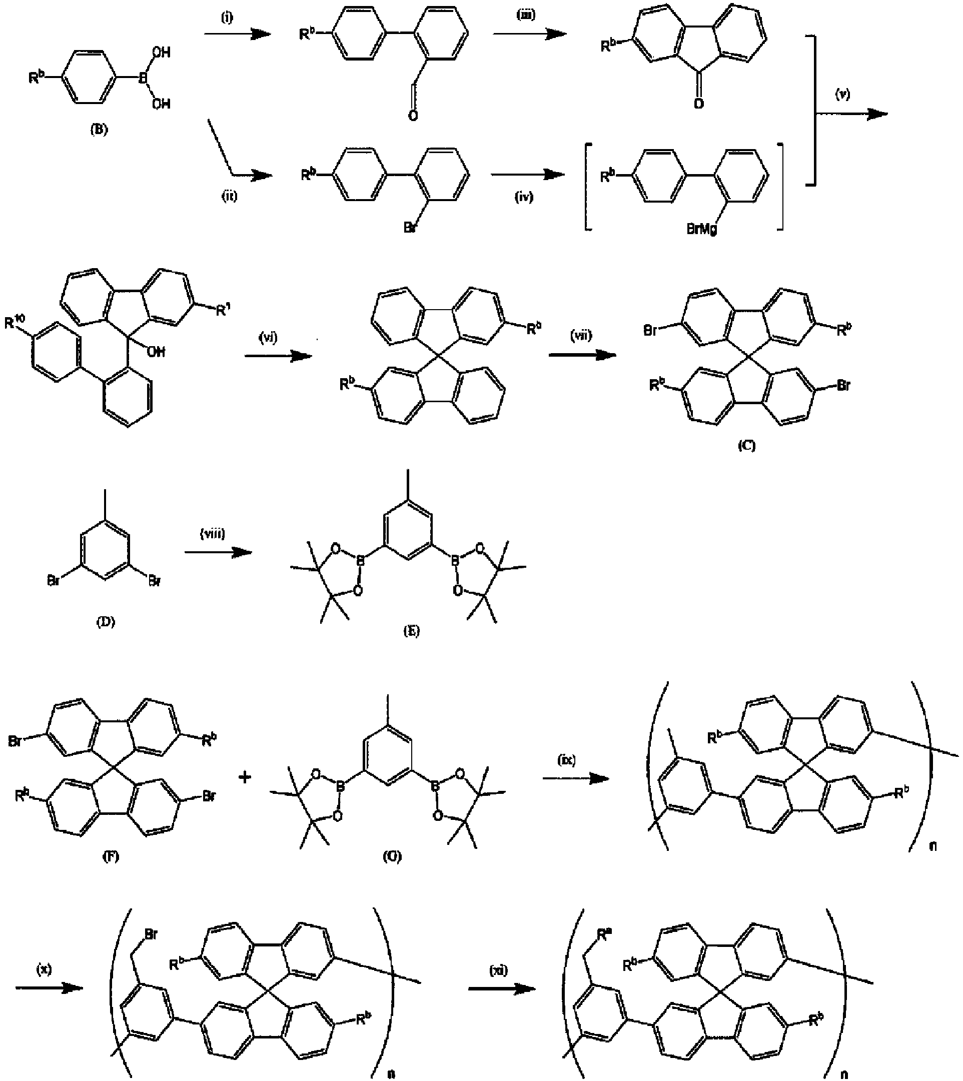

In Scheme A1, R^{a} represents an anion exchange group, and R^{b} represents a substituent corresponding to R¹ and R¹⁰ in the general formula (1-1).

In the example of Scheme A1 above, compound (C) having a brominated spirobifluorene skeleton is synthesized from compound (B) having the desired substituent R^{b} (Step (i) to Step (vii)). Separately, compound (E), which is the precursor of Ar¹ in general formula (1-1), is synthesized by reacting bis(pinacolato)diborane with a brominated compound (D) having the desired aromatic ring (benzene ring in the example of Scheme A1) (Step (viii)). After polymerization of the above compound (C) and the above compound (E), the polymer represented by the general formula (1-1) is obtained by introducing the desired anion exchange group (Step (ix) to Step (xi)). The reaction conditions for each of the above steps may be determined by referring to known reactions.

### - Polymer (P2)

Polymer (P2) has repeating units represented by the following general formula (1-2): 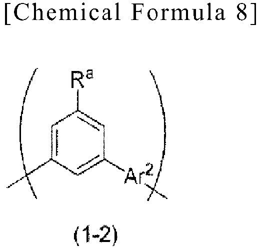 in which R^{a} is a group having an anion exchange group and Ar² is the same as that in the above general formula (1).

Polymer (P2) is a polymer having two or more of the above structural units (1-2) and is a compound whose main chain is entirely composed of aromatic rings. Polymer (P2) has excellent durability against alkalis and radicals because of this structure.

As Ar² in polymer (P2), a phenylene group, a biphenylene group, or a terphenylene group is particularly preferred, and a p-phenylene group (the following formula (Ar-1)), a 4,4'-biphenylene group (the following formula (Ar-2)), or a 4,4"-terphenylene group (the following formula (Ar-3)) is more preferred. 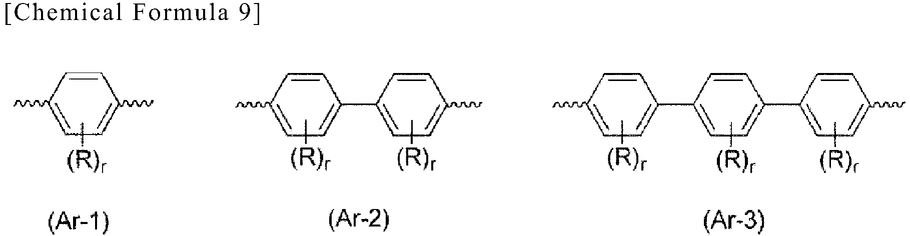 in which R is a substituent that Ar² may have, r is an integer from 0 to 4, and a plurality of R and r may be the same or different.

When Ar² is a p-phenylene group, a 4,4'-biphenylene group, or a 4,4"-terphenylene group, the main chain backbone of polymer (P2) tends to take a zigzag arrangement as shown in the following formula. The following formula is representative of the case where Ar² is a p-phenylene group, but a 4,4'-biphenylene group or a 4,4"-terphenylene group is the same in this respect. As shown in the following formula, the main chain backbone of polymer (P2) tends to take a zigzag arrangement, and furthermore, each R^{a} tends to be disposed on the outer surface of the bend of the backbone. Therefore, intramolecular aggregation due to bending of the main chain and the like is suppressed. As a result, the polymer can form an electrolyte membrane with excellent ionic conductivity.

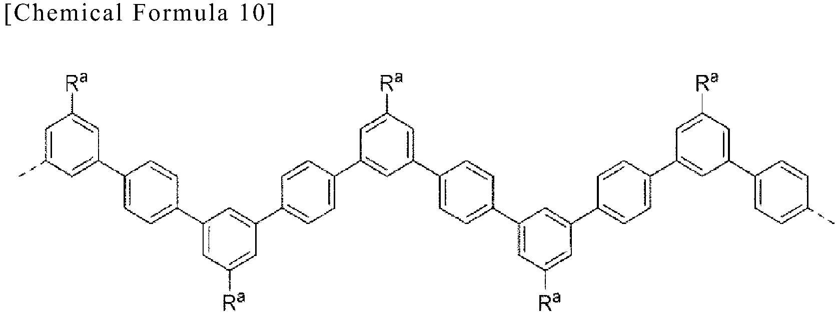

The group R^{a} having an anion exchange group in polymer (P2) is preferably a group represented by the following formula (R^{a}-1). 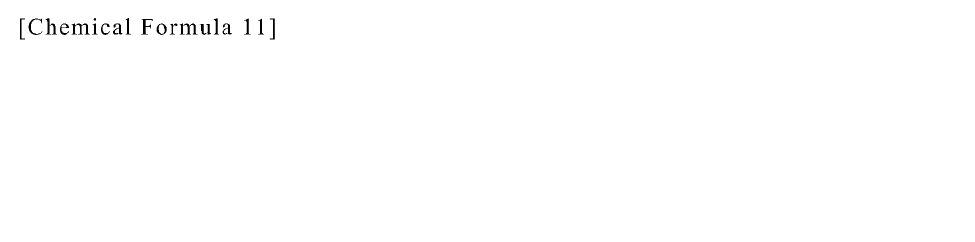 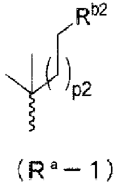 in which R^{b2} is an anion exchange group and p2 is an integer between 1 and 20. Note that the wavy line indicates the bonding site that binds to the benzene ring.

In the group represented by the above formula (R^{a}-1), a carbon atom adjacent to the benzene ring that constitutes the main chain is a quaternary carbon. Therefore, π-π stacking between polymers (P2) is suppressed. As a result, aggregation of polymer (P2) is suppressed, so that the polymer is easily dissolved in solvents, and polymer (P2) has excellent handling properties during membrane formation and other processes.
p2 represents {(number of carbon atoms from R^{b2} to quaternary carbon) - 1} and may be suitably adjusted in the range from 1 to 20. Among them, 1 to 15 is preferred, 1 to 12 is more preferred, and 1 to 6 is still more preferred.

The synthesis method of polymer (P2) is not particularly limited, but one suitable example is the method of Scheme A2 below. 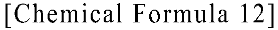 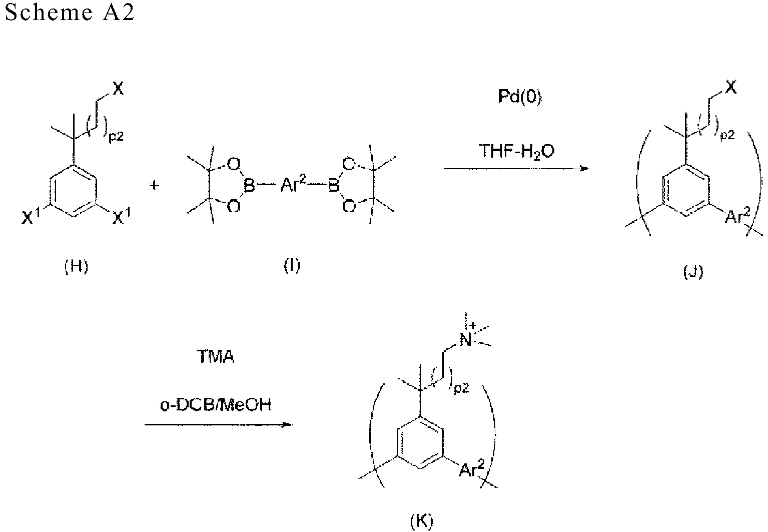 in which X and X¹ represent halogen atoms, and Ar² and p2 are as described above. Br is preferred as the halogen atom in X¹.

In the example of Scheme A2 above, first, compound (H) and compound (I) having the desired Ar² are prepared, and the compound (H) and compound (I) are polymerized to obtain a polymer having the structural unit represented by (J). Polymer (P2) is then obtained by introducing the desired anion exchange group into polymer (J). In the above Scheme A2, quaternary ammonium is introduced, but other ionic functional groups can also be introduced in the same manner. The reaction conditions for each of the above steps may be determined by referring to known reactions.

### - Polymer (P3)

In polymer (P3), in the repeating unit represented by the above general formula (1), Ar² has the partial structure represented by the following formula (2) at both ends. In other words, the Ar² is a divalent group containing an aromatic ring having a fluoro group (-F) at the α-position of the terminal carbon atom. Here, the terminus of Ar² refers to the carbon atom bonded to Ar¹. Note that the wavy line represents the bonding site that binds to Ar¹, and the dotted line indicates that part of the aromatic ring is omitted.

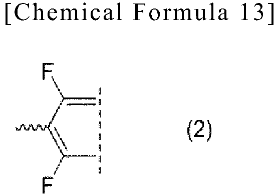

Polymer (P3) has a structure in which Ar¹ having an anion exchange group and Ar² having a partial structure (2) containing a fluoro group (-F) are alternately disposed. Ar1 and Ar² constituting the main chain each have aromatic groups and have excellent chemical durability against alkalis and radicals. In addition, in polymer (P3), Ar¹ having an ion exchange group linked to the end of the side chain through an alkyl chain and Ar² having no ion exchange group are alternately disposed. Because of this structure, it has excellent solubility in solvents and ionic conductivity. In addition, the reactivity of the compound with partial structure (2) and the compound represented by formula (4) described below is high, and polymers with higher molecular weight can be produced. By using the present polymer with high molecular weight, it is also possible to form membranes with more excellent durability.

Ar² may have two partial structures (2) in one ring structure (e.g., a benzene ring), for example, as in formula (b-1) below, or one C-F bond may constitute two partial structures (2) as in formula (b-2) below. Furthermore, in the case of the above chain polycyclic hydrocarbon, it may have one partial structure (2) in each of the two ring structures of the chain polycyclic hydrocarbon, and these rings may be linked directly or through the above linking group, or it may have two partial structures (2) in one of the multiple ring structures. Preferably, Ar² in polymer (P3) does not have a spiro atom.

In polymer (P3), it is preferred that the above Ar² is one or more selected from the following formulas (d1) to (d9) from the viewpoint of forming an electrolyte membrane with excellent ionic conductivity and film formability, and excellent chemical durability and membrane strength. Note that the wavy line indicates the bonding site that binds to Ar¹. 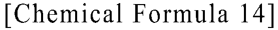 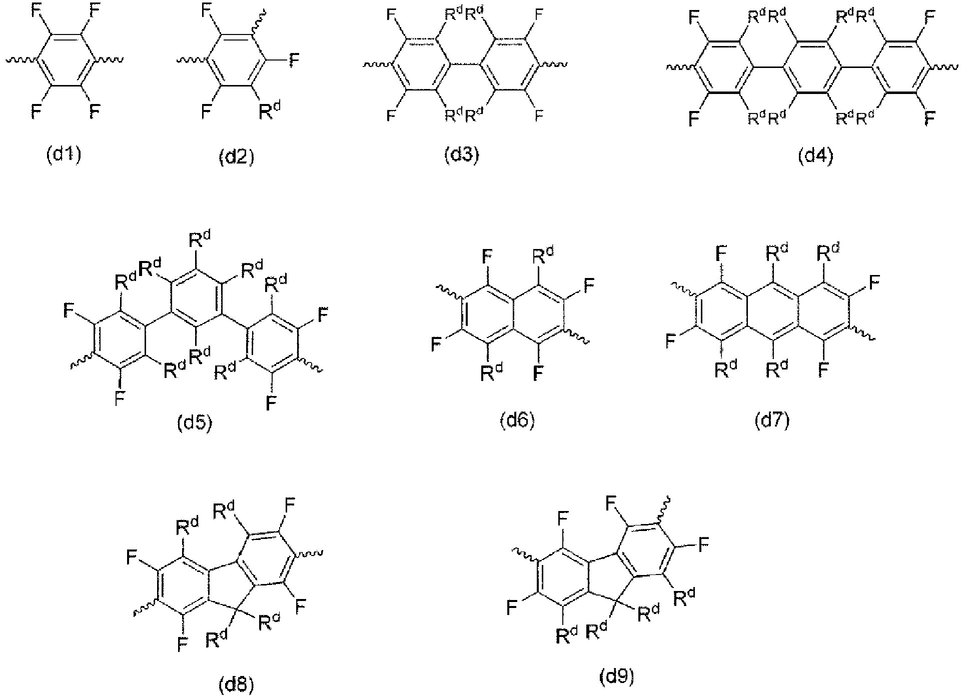 in which R^{d} is each independently a hydrogen atom, a halogeno group or an organic group.

Examples of halogeno group as the above R^{d} include a fluoro group, a chloro group, a bromo group, and an iodo group, and of them, a fluoro group is preferred. Examples of organic group as the above R^{d} include, for example, a linear or branched alkyl group having 1 to 20 carbon atoms (not including the number of carbon atoms of a substituent) and optionally having a substituent (e.g., halogeno group).

From the viewpoint of ease of production, the following formulas (d10) to (d14) are preferred for the above Ar². Note that the wavy line indicates the bonding site that binds to Ar¹.

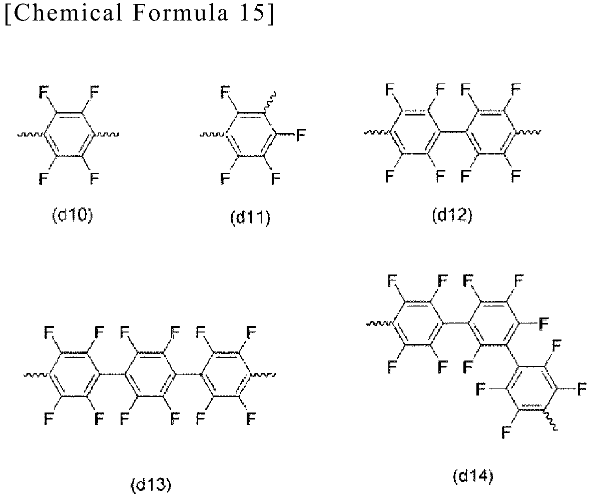

The synthesis method of polymer (P3) is not particularly limited, but one suitable example is the method of Scheme A3 below. 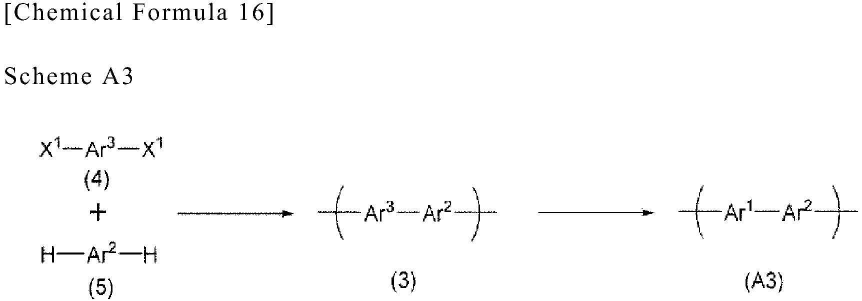 in which X¹ is each independently Br or I, Ar³ is an aromatic group having a functional group selected from halogeno group, sulfonate ester group, phosphate ester group, carboxylate ester group, imidazole group and amino group, and Ar² is the same as that in polymer (P3).

Because of the excellent reactivity of X¹ of compound (4) and the hydrogen atom in the following partial structure (5a) of Ar² of compound (5), ion-conductive polymers with high molecular weight (for example, weight average molecular weight of 30,000 or more, preferably 100,000 or more) can be synthesized relatively easily.

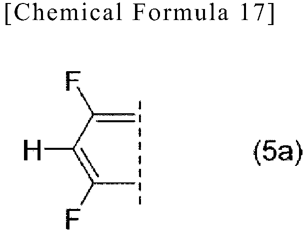

In the above Scheme A3, compound (4) having the desired Ar³ and compound (5) having the desired Ar² are first prepared. Then, these compounds are reacted in the presence of, for example, a Pd complex, a ligand, a carboxylic acid (RCO₂H) and a base in a solvent at 80 to 140°C for 1 to 48 hours to obtain a polymer having the structural unit (3).

Polymer (P3) is then obtained by introducing the desired ion exchange group into the polymer having the structural unit (3). Thus, polymer (P3) can be easily produced with very few synthesis steps by using compound (4) and compound (5) as raw materials.

### - Polymer (P4)

Polymer (P4) has repeating units represented by the following general formula (1-4): 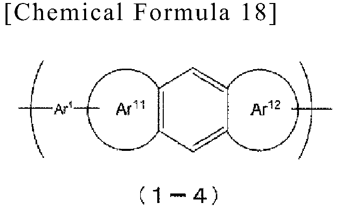 in which rings Ar¹¹ and Ar¹² are rings condensed to a benzene ring, and together constitute a fused ring of three or more rings having aromaticity as a whole, and Ar¹ is the same as that in the above general formula (1).

Polymer (P4) has a structure in which Ar¹ having an anion exchange group and Ar² consisting of fused rings of three or more rings are alternately repeated. In general, polymers containing many ion exchange groups tend to swell easily, but polymer (P4) has excellent swelling resistance due to the alternating repetition of Ar¹ and Ar² and π-π stacking of fused rings of three or more rings.

Rings Ar¹¹ and Ar¹² are aromatic rings optionally having heteroatoms. The heteroatoms include N (nitrogen atom), O (oxygen atom) and S (sulfur atom). For fused rings including rings Ar¹¹ and Ar¹², a fused ring of three or more rings is preferred from the viewpoint of swelling resistance. Meanwhile, from the viewpoint of increasing the ion exchange capacity of polymer (P4), a fused ring of five or less rings is preferable, and a fused ring of four or less rings is more preferable.

Preferred specific examples of the fused rings include the following. Note that the wavy line indicates the bonding site that binds to Ar¹. The hydrogen atom may be replaced by a group that does not have the above anion exchange group.

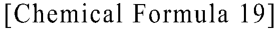

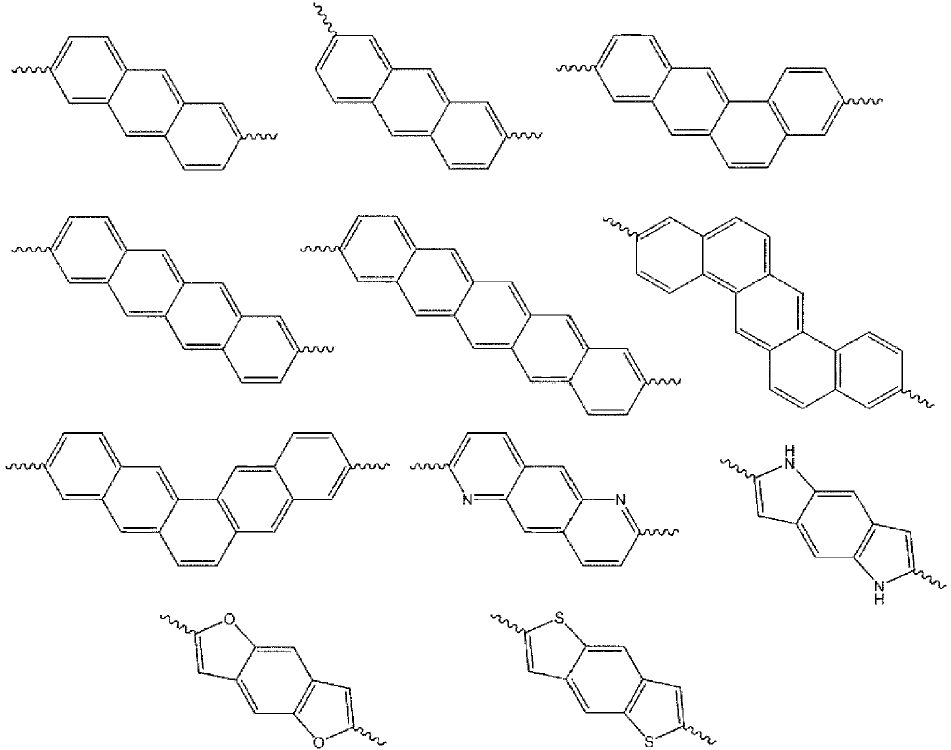

Polymer (P4) is preferably synthesized by preparing a precursor (1-5) having a repeating unit represented by the following general formula (1-5), and removing a substituent (TL) after filling it into a porous base material. 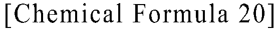 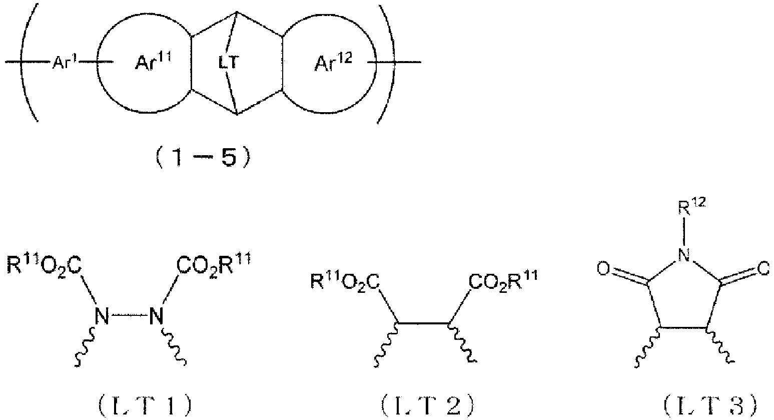 in which LT is a group represented by any of general formulas (LT1) to (LT3), R¹¹ is each independently an alkyl group having 1 to 6 carbon atoms, R¹² is an alkyl group having 1 to 6 carbon atoms or a phenyl group, and Ar¹, Ar¹¹, and Ar¹² are the same as those in the above general formula (1-4).

The alkyl group having 1 to 6 carbon atoms as R¹¹ and R¹² can be either a linear or branched alkyl group. Specific examples include a methyl group, an ethyl group, a propyl group, a n-butyl group, a tert-butyl group, a pentyl group, and a hexyl group.

Polymer (P4) has excellent swelling resistance as described above. Therefore, polymer (P4) is difficult to dissolve in various organic solvents and has poor handling properties during processing. In the above precursor, a substituent (TL) represented by any of the above general formulas (LT1) to (LT3), which is bulky and relatively easily removable by the action of heat or light, is introduced into a site corresponding to the fused ring of polymer (P4). The precursor (1-5) has improved solubility in various organic solvents due to inhibition of π-π stacking of the hydrophobic moiety by the substituent. Therefore, the above precursor has excellent handling properties and is easily filled into a porous base material. The substituent (TL) can be removed by heating or light irradiation.

The synthesis method of the above precursor is not particularly limited, but preferred specific examples include the method of Scheme A4 below.

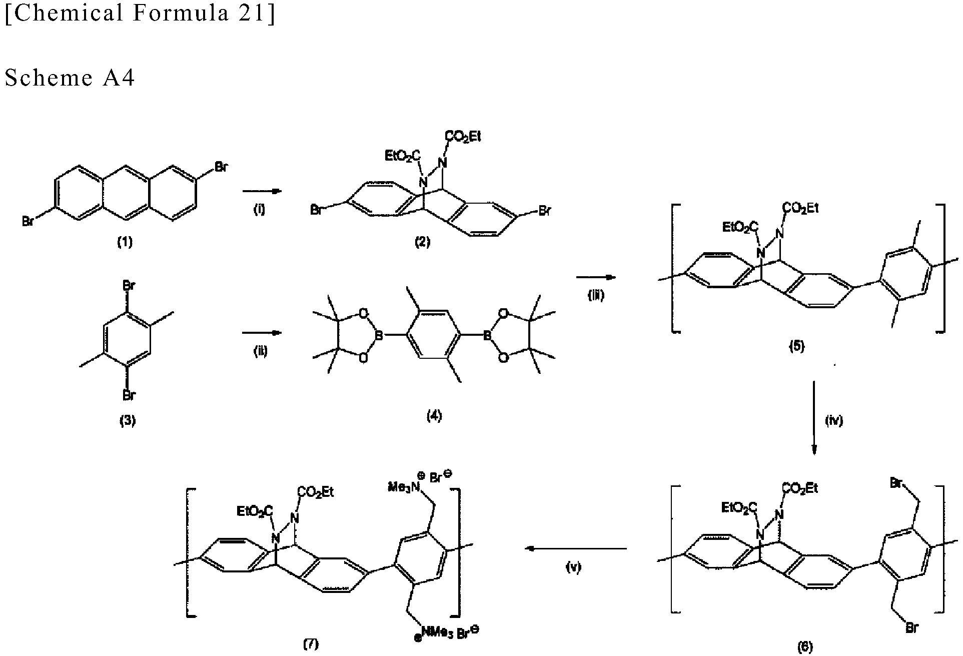

An example of each step of the above Scheme A4 will be described.

Step (i): A toluene solution of the above compound (1) is prepared, diethyl azodicarboxylate (DEAD) is added thereto, and the solution is heated under reflux to obtain the above compound (2).

Step (ii): Separately, a N,N-dimethylformamide (DMF) solution of the above compound (3) is prepared, and bis(pinacolato)diborane, potassium acetate (KOAc), and [1,1'-bis(diphenylphosphino)ferrocene]palladium(II) dichloride (Pd(dppf)Cl₂) are added thereto, and the solution is heated to 90°C to obtain the above compound (4).

Step (iii): Tripotassium phosphate (K₃PO₄) and tetrakis(triphenylphosphine)palladium (Pd(PPH₃)₄) are added to a toluene solution of the above obtained compound (2) and the above compound (4), and the solution is heated to 100°C to polymerize to obtain the above compound (5).

Step (iv): The obtained compound (5), N-bromosuccinimide (NBS), and azobisisobutyronitrile (AIBN) are added and mixed in chlorobenzene, and the solution is heated to 110°C to obtain the above compound (6).

Step (v): The obtained compound (6) is heated to 50°C in DMF/THF (tetrahydrofuran) mixed solvent to obtain the precursor represented by the above chemical formula (7).

### <Pore-filling membrane>

In the electrolyte membrane used in the present disclosure, it is preferable to use a porous base material as a base film and to use a pore-filling membrane filled with the above polymer. This structure provides mechanical strength to the polyarylene polymer, which has excellent chemical durability.

The porous base material is a base material having pores that can retain polymer. It is preferable that at least some of the pores in the porous base material form through holes from the viewpoint of the improvement in ionic conductivity.

The form of the base material is preferably nonwoven fabric or porous film, and more preferably in the form of porous film from the viewpoint of providing mechanical strength.

The porosity of the porous base material (= volume of voids/bulk volume × 100 (%)) is preferably 30 to 95%, more preferably 40 to 80%, and still more preferably 45 to 70% to achieve both mechanical strength and ionic conductivity.

The membrane thickness of the porous base material is preferably 5 to 200 µm, more preferably 7 to 100 µm, and still more preferably 10 to 50 µm to achieve both mechanical strength and ionic conductivity.

From the viewpoint of filling and retaining polyarylene polymer and mechanical strength, the pore diameter of the porous base material is preferably 10 to 10,000 nm as an average pore diameter, and more preferably 10 to 1,000 nm.

A polyolefin porous base material is preferred as the material of the porous base material, from the viewpoint of chemical durability, especially from the viewpoint of stability in alkali. The use of polyolefin porous base material also has the advantage that polyarylene polymers, especially high molecular weight polyarylene polymers with a weight average molecular weight of 100,000 or more, can be easily filled. Polyethylene porous base materials, polypropylene porous base materials, or polytetrafluoroethylene porous base materials are particularly preferred as the polyolefin porous base materials from the viewpoint of mechanical strength and chemical resistance. Ultra-high molecular weight polyethylene (e.g., weight average molecular weight of 1 million or more) porous base material is particularly preferred as the polyethylene porous base material.

Examples of methods for producing pore-filling membranes include a method in which a polymer having an ion exchange group, for example, a polyarylene polymer is provided to a porous base material to fill the pores of the porous base material and dried.

Examples of methods for applying a polyarylene polymer to a porous base material include, for example, a dipping method, a spraying method, a spin-coating method, and a bar coding method, after preparing a polyarylene polymer solution. A polyarylene polymer solution is permeated into the porous base material and then dried to obtain an electrolyte membrane (A) composed of a pore-filling membrane. The membrane thickness of the electrolyte membrane (A) can be made the same as that of the porous base material, for example, by producing a pore-filling membrane using a polymer solution in an amount that fills the porosity volume of the porous base material. The filling of the polyarylene polymer in the porous base material can be confirmed by Raman analysis, for example.

### [Catalyst layer (B)]

The catalyst-coated electrolyte membrane of the present disclosure has a structure in which at least one of main surfaces of the electrolyte membrane (A) is coated with the catalyst layer (B). In an electrolyte membrane used for water electrolysis, an anode catalyst is disposed as an anode on one surface, and a cathode catalyst is disposed as a cathode on the other surface.

The anode catalyst is preferably metal or metal alloy. The metal or metal alloy can be appropriately selected from known ones, and examples thereof include platinum, cobalt, nickel, palladium, iron, silver, gold, copper, iridium, molybdenum, rhodium, chromium, tungsten, manganese, ruthenium, a metal compound thereof, a metal oxide thereof and an alloy including two or more of these metals.

The cathode catalyst is preferably metal or metal alloy. The metal or metal alloy can be appropriately selected from known ones, and examples thereof include platinum, cobalt, nickel, palladium, iron, silver, gold, copper, iridium, molybdenum, rhodium, chromium, tungsten, manganese, ruthenium, a metal compound thereof, a metal oxide thereof and an alloy including two or more of these metals.

### <(B-1) Ionomer>

The catalyst layer (B) of the present disclosure preferably has a structure in which the above metal is dispersed in the ionomer (B-1) from the viewpoint of adhesion to the electrolyte membrane (A) and expansion of the reaction specific surface area.

As the ionomer (B-1), a sulfonated fluoropolymer, for example, a perfluorinated sulfonic acid (PFSA) ionomer, a partially fluorinated polymer, or the like can be used, and PFSA and the like selected from Nafion^{™} (Chemours Company), Aquivion (registered trademark) (Solvay Specialty Polymers), Flemion^{™} (Asahi Glass Group), and Aciplex_{TM} (Asahi Kasei Chemicals Corporation) are available from the market.

In the catalyst-coated electrolyte membrane of the present disclosure, the stress at break of the ionomer (B-1) is preferably 0.01 or more and 0.5 or less with respect to the stress at break of the electrolyte membrane (A). That is, for example, when the electrolyte membrane (A) has a stress at break of 85 MPa, the ionomer (B-1) has a stress at break of preferably 0.85 MPa to 42.5 MPa. This structure realizes mechanical strength that can withstand use particularly even in the AEMWE method in which a state change from liquid to gas continuously occurs.

The lower limit of the stress at break of the catalyst layer (B) with respect to the stress at break of the electrolyte membrane (A) is more preferably 0.05, still more preferably 0.10, and particularly preferably 0.12. Also, the upper limit is preferably 0.35, still more preferably 0.24, and particularly preferably 0.20. Therefore, the most preferable value of the stress at break of the catalyst layer (B) with respect to the stress at break of the electrolyte membrane (A) is 0.12 or more and 0.20 or less.

Here, the stress at break of the ionomer (B-1) means a value obtained by the same measurement method as that for the electrolyte membrane (A). That is, the stress at break is not measured in an actual use state, but a test piece similar to the electrolyte membrane (A) is prepared, a uniaxial tensile test is performed at 0.3 m/min in an environment of 25°C and 40%RH using EZ-SX (manufactured by Shimadzu Corporation), and the stress at break is calculated from the cross-sectional area of the fracture surface.

As a method for realizing the above stress at break, it is preferable to use a polymer that is the same as or similar to the polymer having an ion exchange group used for the electrolyte membrane (A) for the ionomer (B-1). That is, as the ionomer (B-1), one selected from the polymers having a structural unit represented by the above formula (1) is suitable.

In addition, it is particularly preferable to use the same polymer as the polymer having an ion exchange group used for the electrolyte membrane (A).

As the structure of the catalyst layer (B) in the present disclosure, the amount of the ionomer (B-1) in the catalyst layer (that is, ionomer (B-1)/catalyst ratio) is preferably 0.05 or more and 1.5 or less. The upper limit thereof is still more preferably 1.2, 1.0, 0.7, and 0.5. The lower limit thereof is still more preferably 0.1, 0.15, or 0.2. Therefore, the amount of the ionomer (B-1) in the catalyst layer (B) is most preferably 0.2 or more and 0.5 or less.

### [Preparation of catalyst-coated electrolyte membrane]

The catalyst-coated electrolyte membrane of the present disclosure is obtained by forming the catalyst layer (B) on at least one surface, more preferably both surfaces, of the electrolyte membrane (A). Examples of the method for forming the catalyst layer (B) include coating methods such as a pulse spray coating method, an ultrasonic spray coating method, a die coater coating method, a bar coater coating method, and an electrode transfer method coating method. Depending on the coating method, a drying step may be included.

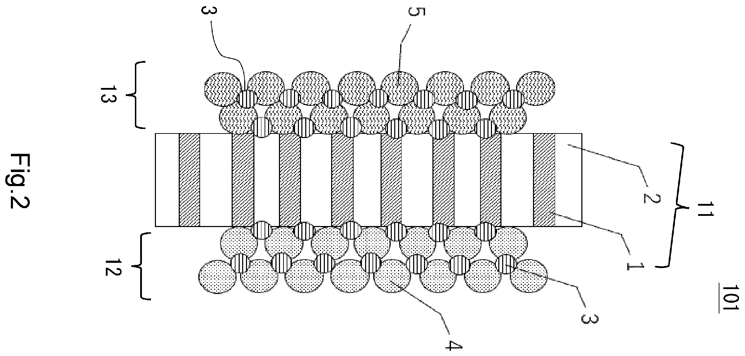

As a preferable example of the catalyst-coated electrolyte membrane of the present disclosure, there is a catalyst-coated electrolyte membrane having anion exchange-type water electrolysis performance. Fig. 2 shows a schematic cross-sectional view of an example of a catalyst-coated electrolyte membrane having anion exchange-type water electrolysis performance. A catalyst-coated electrolyte membrane 101 of Fig. 2 has (A) an electrolyte membrane 11 in which pores of a base film 2 as a porous base material are impregnated with a polymer (electrolyte polymer) 1 having an ion exchange group. Then, the catalyst-coated electrolyte membrane 101 has a first catalyst layer 12 having an ionomer 3 (B-1) and a hydrogen generating catalyst 4 on a first main surface of the electrolyte membrane 11, and a second catalyst layer 13 having an ionomer 3 (B-1) and an oxygen generating catalyst 5 on a second main surface of the electrolyte membrane 11.

The anion exchange membrane water electrolysis performance refers to performance in which water electrolysis can be performed without a large increase in voltage when an alkali solution is allowed to flow through an electrochemical cell in which a catalyst layer in which a metal powder having a hydrogen generating ability is dispersed in an ionomer is formed on the cathode side of an electrolyte membrane having an anion exchange group and a catalyst layer in which a metal powder having an oxygen generating ability is dispersed in an ionomer is formed on the other side as an anode, and a current is allowed to flow from a power supply into the electrochemical cell containing the electrolyte membrane ion-exchanged with OH ions by the alkali solution and the ionomer. Specifically, carbon supporting platinum or carbon supporting a platinum ruthenium alloy is generally used as the hydrogen generating catalyst, and iridium oxide is generally used as the oxygen generating catalyst. In a case where 1 mol/L potassium hydroxide is used as the alkali solution and the electrochemical cell is at 80°C, when the current density is 1 A/cm², the voltage may be 2.0 V or less, but is preferably 1.7 V to 1.8 V, and particularly preferably 1.78 V or less.

The ion exchange capacity represents the amount of ions that can be adsorbed by an ion exchange resin, and the higher the value, the higher the ionic conductivity. In the electrolyte membrane (A) of the present disclosure, the ion exchange resin is a polymer having an ion exchange group. As the ion exchange capacity is higher, high ionic conductivity is exhibited. On the other hand, the water content is also increased, the electrolyte membrane swells, and the gas barrier property is lowered. Therefore, the ion exchange capacity is preferably 1.0 mmol/g to 2.0 mmol/g, particularly preferably 1.2 mmol/g to 1.9 mmol/g, and most preferably 1.3 to 1.7 mmol/g.

The catalyst-coated electrolyte membrane of the present disclosure is suitably used for a fuel cell and an electrolytic apparatus.

### Example 1

Hereinafter, the present disclosure will be described more specifically with reference to examples. Note that the present disclosure is not limited by these descriptions, and can be appropriately changed without departing from the spirit.

### [Synthesis of compound (1-1)]

To a four-necked flask, into an aqueous solution (600 mL) of sodium hydroxide (200 g), n-tetrabutylammonium chloride (3.04 g), 1,10-dichlorodecane (1097 mmol), and 2,7-dibromofluorene (109.7 mmol) were added into this two-necked flask with a syringe, and the mixture was stirred under nitrogen. Then, the mixture was reacted at 90°C under nitrogen for 90 minutes, and then the resulting reaction solution was cooled to room temperature (25°C). The organic phase in the cooled reaction solution was extracted with toluene (200 mL) using a separating funnel, and washed with 1 M hydrochloric acid (50 mL) and saturated saline (200 mL × 2). The toluene in the resulting organic phase was removed by an evaporator, and the unreacted 1,10-dichlorodecane was further removed at 180°C under reduced pressure. The resulting residue was applied to a silica gel column (developing solvent: hexane) to obtain the following compound (1-1) (68.7 mmol).

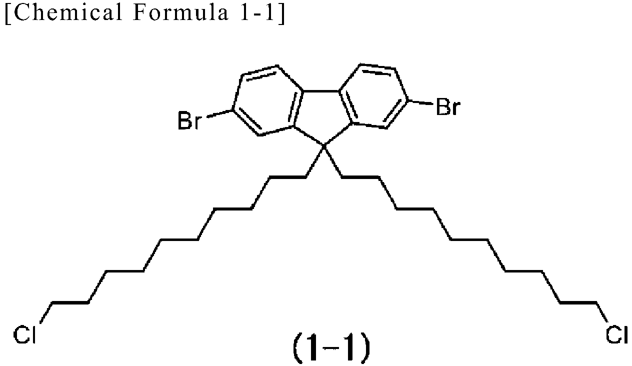

### [Synthesis of compound (1-2)]

Compound (1-1) (57.7 mmol) and 1,3,5-trimethylbenzene (159 mL) were added to a separable flask, and the mixture was stirred while bubbling nitrogen (20 mL/min) for30 minutes. Next, cesium carbonate (173 mmol), pivalic acid (57.7 mmol), tris(2-methoxyphenyl)phosphine (407 mg), Pd₂(dba)₃ (291 mg) and 1,2,4,5-tetrafluorobenzene (57.7 mmol) were added thereto, and the mixture was stirred. The mixed liquid was reacted at room temperature (25°C) for 15 minutes under nitrogen, then reacted at 98°C for 8 hours, and then reacted at 75°C for 75 minutes.

1 M hydrochloric acid (100 mL) and toluene (600 mL) were added to the resulting reaction product (solid fraction), and the mixture was stirred at 60°C for 30 minutes, then insoluble components were removed by filtration under reduced pressure, and an organic phase was extracted with a separating funnel. The extracted organic phase was washed with 1 M hydrochloric acid and saturated saline, then the liquid component in the resulting organic phase was removed by an evaporator to dry to give a solid residue. The resulting residue was dissolved in toluene and reprecipitated in hexane/methanol = 3/1. The resulting precipitate was filtered to remove the liquid component. The obtained solid content was vacuum-dried to obtain compound (1-2) having a molecular weight dispersity of 4.88. From the result of GPC shown in Fig. 2, it was confirmed that in this compound (1-2), the peak end was 14.025 min, indicating a decrease in low-molecular-weight compounds.

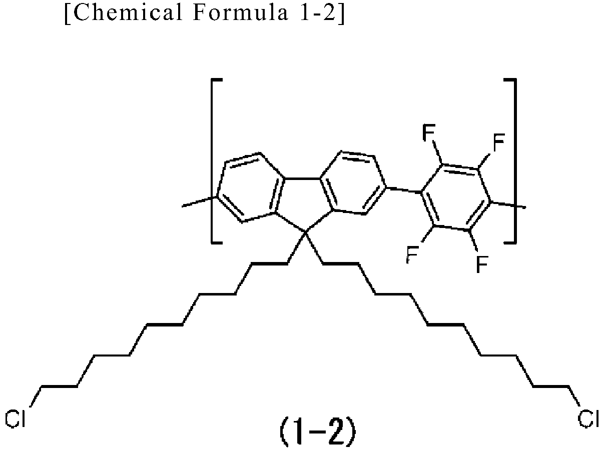

### [Synthesis of compound (1-3)]

Compound (1-2) (2.07 g) was dissolved in 3-methoxy-N,N-dimethylpropanamide (25 mL). A 25 mass% trimethylamine solution in methanol (10 mL) was added to the obtained solution, and the mixture was stirred at 100°C for 9 hours. Thereafter, it was cooled to room temperature (25°C), and the solution was reprecipitated in toluene. The resulting precipitate was filtered to remove the liquid component. The obtained solid content was vacuum-dried to obtain compound (1-3) (2.29 g). As described above, since compound (1-2) was synthesized to contain a reduced amount of low-molecular-weight components, it is presumed that compound (1-3) similarly contains few low-molecular-weight components.

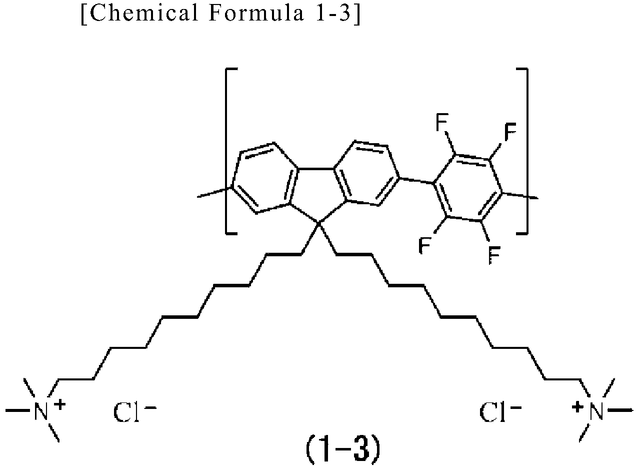

### [Electrolyte membrane 1]

As a porous base material, polyethylene having submicron-sized pores (HIPORE NH815: manufactured by Asahi Kasei Corporation) was heated, and a solution obtained by dissolving the compound represented by Chemical Formula 1-3 in a solvent was added dropwise thereto, followed by drying the solvent at 80°C to fill the compound into the pores, thereby obtaining an electrolyte membrane 1 having a thickness of 13 µm.

### <Measurement of stress at break of electrolyte membrane>

The electrolyte membrane 1 was cut into 1.5 mm × 50 mm, and subjected to a uniaxial tensile test at 0.3 m/min in an environment of 25°C and 40%RH using EZ-SX (manufactured by Shimadzu Corporation), and the stress at break was calculated from the cross-sectional area of the fracture surface. The results are shown in Table 1.

### [Electrolyte membranes 2 to 4]

For electrolyte membranes 2 to 4, namely Fumasep FAAM-20 (manufactured by Fumatech), CMX-40-10 (manufactured by ORION Polymer), and PiperION-A20-HCO3 (manufactured by Versogen), the stress at break was measured for each in the same method as described above. The results are shown in Table 1.

**[Table 1]**

| | Stress at break |
|---|---|
| Electrolyte membrane 1 | 138 MPa |
| Electrolyte membrane 2 | 80 MPa |
| Electrolyte membrane 3 | 50 MPa |
| Electrolyte membrane 4 | 39 MPa |

### [Measurement of stress at break of ionomer (B-1)]

A glass plate was heated, and a solution obtained by dissolving the compound represented by Chemical Formula 1-3 in a solvent (a mixed liquid of dimethyl sulfoxide and hexanol) was added dropwise thereto, and the solvent was dried at 80°C. A film composed of an ionomer was peeled off from the glass, and a 28 µm test piece was prepared. The obtained ionomer film was cut into 3.0 mm × 50 mm, and subjected to a uniaxial tensile test at 0.3 m/min in an environment of 25°C and 40%RH using EZ-SX (manufactured by Shimadzu Corporation), and the stress at break was calculated from the cross-sectional area of the fracture surface. The results are shown in Table 2.

**[Table 2]**

| | Stress at break |
|---|---|
| Ionomer | 20 MPa |

### <Ion exchange capacity test>

Using 50 mg of each of electrolyte membranes 1 to 4, each was immersed in a 1 mol/L aqueous solution of sodium nitrate, and after 24 hours had elapsed at 25°C, potentiometric titration was performed with a 0.02 mol/L aqueous solution of silver nitrate in a state where chloride ions and nitrate ions in the electrolyte membrane were sufficiently ion-exchanged. The ion exchange capacity was calculated from the titration volume to the inflection point and the weight of the electrolyte membrane. For electrolyte membranes 2 to 4, for the purpose of anion exchange, after immersion in an aqueous sodium chloride solution for 48 hours, potentiometric titration was performed by the above method. The titration was performed using COM-A19 manufactured by HIRANUMA Co., Ltd. For electrolyte membrane 1, porous base materials having different membrane thicknesses of 15 µm, 9 µm, and 25 µm were prepared, and a solution containing a polymer component having a volume of 1.1 times the void volume calculated from the porosity and thickness of each porous base material was applied to prepare electrolyte membranes 1 having different membrane thicknesses, and the same test was performed. The calculation method is shown in Calculation Method 1, and the results are shown in Table 3.

### [Computation Method 1]

$Exchange capacity \left(mmol/g\right) = \left(EP1-BL1\right) \times TF \times C 1 \times K 1 / S$
EP1: Titration volume required to the first end point (mL)
BL1: Titration volume required for blank test (mL)
TF: Titrant factor (1.0003)
C1: Concentration conversion factor (0.0001 mol/mL)
K1: Unit conversion factor (1000)
S: Sample amount (g)

**[Table 3]**

| | Ion exchange capacity |
|---|---|
| Electrolyte membrane 1 (membrane thickness: 15 µm) | 1.37 mmol/g |
| Electrolyte membrane 1 (membrane thickness: 9 µm) | 0.88 mmol/g |
| Electrolyte membrane 1 (membrane thickness: 25 µm) | 1.21 mmol/g |
| Electrolyte membrane 2 | 0.53 mmol/g |
| Electrolyte membrane 3 | 1.70 mmol/g |
| Electrolyte membrane 4 | 1.56 mmol/g |

### [Example 1: Catalyst-Coated Electrolyte Membrane 1]

Carbon supporting platinum-ruthenium (TEC66E50: manufactured by TANAKA PRECIOUS METAL GROUP Co., Ltd.) was dispersed in a solution obtained by dissolving the compound represented by Chemical Formula 1-3 in a solvent (a mixed liquid of isopropanol and water) to obtain a metal-dispersed ionomer solution 1.

In addition, an ionomer solution 2 was obtained by the same method using iridium oxide (Premion: manufactured by THERMO SCIENTIFIC CHEMICALS) in place of the carbon supporting platinum-ruthenium.

The electrolyte membrane 1 was coated with the ionomer solution 1 by a spray coating method, and dried at 80°C. Subsequently, the opposite surface was coated with the ionomer solution 2 by a spray coating method and dried at 80°C to obtain a catalyst-coated electrolyte membrane 1 of the present disclosure (catalyst area: 1 cm × 1 cm).

The thickness of the catalyst to be coated was adjusted by spray coating with a metal-dispersed ionomer solution 1 having an ionomer/carbon ratio adjusted to 0.5 while quantitatively determining the platinum by X-ray fluorescence such that the weight per unit area of platinum in the coated catalyst was 0.5 mg/cm². Similarly, the thickness was adjusted by spray coating with a metal-dispersed ionomer solution 2 having an ionomer/iridium ratio adjusted to 0.29 while quantitatively determining the iridium by X-ray fluorescence such that the weight per unit area of iridium in the coated catalyst was 1.5 mg/cm².

### [Comparative Example 1: Catalyst-Coated Electrolyte Membrane 2]

Comparative Example 1 (catalyst-coated electrolyte membrane 2) was obtained in the same manner as in Example 1 except that the electrolyte membrane 1 was replaced with the electrolyte membrane 2.

### <Anion exchange membrane water electrolysis test>

In each of the catalyst-coated electrolyte membranes of Example 1 and Comparative Example 1, a nickel porous body was placed on the anode side, and a carbon paper was placed on the cathode side as a porous transport layer PTL. An anion exchange membrane water electrolysis test was performed using a JARI standard cell at 80°C at a liquid flow rate of a 1 M aqueous potassium hydroxide solution of 1 cc/min on the anode side and 0 cc/min on the cathode side. The measurement results at 1 A/cm² are shown in Table 4. This voltage value is a value calculated from an average value of 60 data from 2 minutes 1 second to 3 minutes 0 second obtained by performing measurement every 1 second for 3 minutes.

**[Table 4]**

| | Voltage of 1 A/cm² |
|---|---|
| Example 1 | 1.78 V |
| Comparative Example 1 | 2.15 V |

### <Alkali durability test>

An immersion test in the same 1 M aqueous potassium hydroxide solution as in the anion exchange membrane water electrolysis test was performed for 400 hours, and the cell resistance at 1.5 V was measured. Then, the change rate from the initialvalue was calculated. The results are shown in Table 5.

**[Table 5]**

| | Cell resistance at 1.5 V (after 400 hours) | Change rate |
|---|---|---|
| Example 1 | 0.108 Ω | 8% |
| Comparative Example 1 | 0.941 Ω | 227% |

From the test results of Example 1, it was confirmed that the catalyst-coated electrolyte membrane of the present disclosure exhibits low voltage and excellent water electrolysis performance in the anion exchange membrane water electrolysis test. In addition, it was confirmed that the catalyst-coated electrolyte membrane of the present disclosure also has excellent alkali durability with a small change rate of the cell resistance.

### Industrial Applicability

According to the present disclosure, it is possible to provide a catalyst-coated electrolyte membrane which is highly durable and can be used in an AEMWE method without problems.

This application claims priority based on Japanese Patent Application No. 2023-194981 filed on November 16, 2023, the entire disclosure of which is incorporated herein.

### Reference Signs List

1:POLYMER HAVING ION EXCHANGE GROUP (ELECTROLYTE POLYMER)
2:BASE FILM
3:IONOMER
4:HYDROGEN GENERATING CATALYST
5:OXYGEN GENERATING CATALYST
11:ELECTROLYTE MEMBRANE
12:FIRST CATALYST LAYER
13:SECOND CATALYST LAYER
100:CATALYST-COATED ELECTROLYTE MEMBRANE

## Claims

1. A catalyst-coated electrolyte membrane comprising (A) an electrolyte membrane having a stress at break of 85 MPa or more and (B) a catalyst layer.

2. The catalyst-coated electrolyte membrane according to claim 1, wherein the electrolyte membrane (A) contains a polymer having an anion exchange group.

3. The catalyst-coated electrolyte membrane according to claim 1 or 2, having anion exchange membrane water electrolysis performance.

4. The catalyst-coated electrolyte membrane according to claim 1 or 2, having (A-1) a polymer having no ionic conductivity in the electrolyte membrane (A).

5. The catalyst-coated electrolyte membrane according to claim 1 or 2, wherein the electrolyte membrane (A) has an ion exchange capacity of 0.8 to 1.5 mmol/g.

6. The catalyst-coated electrolyte membrane according to claim 1 or 2, wherein the catalyst layer (B) contains an ionomer (B-1), and a ratio of a stress at break of the ionomer (B-1) to a stress at break of the electrolyte membrane (A) is 0.01 or more and 0.5 or less.

7. The catalyst-coated electrolyte membrane according to claim 6, comprising, as the ionomer (B-1), the same polymer as the polymer used for the electrolyte membrane (A).

8. The catalyst-coated electrolyte membrane according to claim 1 or 2, wherein the electrolyte membrane (A) has a pore-filling structure.

9. The catalyst-coated electrolyte membrane according to claim 1 or 2, wherein the electrolyte membrane (A) contains a polymer having a structural unit represented by the following formula (1): 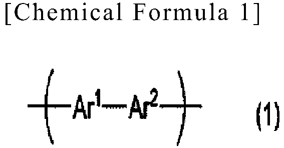
wherein Ar¹ is an aromatic group having an ion exchange group, or a group in which aromatic rings having ion exchange groups are linked through a single bond, and a plurality of Ar¹s may be the same or different,
Ar² is an aromatic group having no ion exchange group, or a group in which two or more aromatic rings having no ion exchange group are linked through a single bond or a spiro atom, and a plurality of Ar²s may be the same or different, and
the aromatic rings of Ar¹ and the aromatic rings of Ar² are linked through a single bond.
